# EUROPEAN PATENT APPLICATION

(11) **EP 2 015 182 A2**
(43) Date of publication of application: **14.01.2009**
(21) Application number: 08009746.2
(22) Date of filing: 28.05.2008
(51) Int. Cl.: G06F 11/07

(54) **Distributed system**

(30) Priority: 30.05.2007 JP 2007142758
(71) Applicant: Hitachi Ltd., Chiyoda-ku Tokyo 100-8280 (JP)
(72) Inventor: Matsubara, Masahiro, Chiyoda-ku Tokyo 100-8220 (JP); Sakurai, Kohei, Chiyoda-ku Tokyo 100-8220 (JP)
(74) Representative: Beetz & Partner

(57) **Abstract**

There is provided a distributed system having a plurality of nodes (10) connected via a network (100). Each node in the distributed system includes: an error monitor unit (141) for monitoring an error in each of the other nodes; a send/receive processing unit (142) for sending and receiving data to and from each of the other nodes in order to exchange error monitor results among the nodes via the network; an abnormality determination unit (143) for determining, for each node, presence or absence of an abnormality based on an abnormality determination condition; and a counter unit (144) for counting occurrences of the abnormality for each node and each abnormality determination condition.

## Description

### FIELD OF THE INVENTION

The present invention relates to high reliability control systems in which multiple devices connected to a network cooperate.

### BACKGROUND OF THE INVENTION

In recent years, in order to improve drivability and safety of automobiles, there have been developed vehicle control systems which electronically transmit operations of a vehicle driver such as acceleration, steering and braking to vehicle forces. In such systems, multiple electronic control units (ECUs) distributed throughout a vehicle cooperate by exchanging data via a network. It is essential to the fail-safety of such systems that, when a failure occurs in one of ECUs in a network, the remaining normal ECUs correctly locate the faulty ECU and perform a suitable backup control depending on the situation. To provide such mechanism, Patent Document 1 discloses a technique in which each node (processing unit such as ECU) in a system monitors the other nodes in a network.

Patent Document 1: Japanese Patent Laid-open No. 2000-47894

### SUMMARY OF THE INVENTION

Patent Document 1 describes that an extra node (shared disk) is required for sharing monitor information (such as the operating status of a database application) among nodes. However, if such a shared disk fails, the node-fault monitoring can no longer be continued. Also, such provision of a shared disk may incur a problem of increased system cost. To address such problems, the following methods can be employed. For example, all nodes independently monitor each node-fault and exchange monitor results with the other nodes via a network in order to count all the monitor results so gathered and make a final determination of the occurrence of the node-fault. More specifically, the above final fault determination is performed as follows. When the number of monitoring nodes which detect an error in a monitored node j exceeds a threshold for satisfying an "abnormality determination condition 1", then the node j is determined to be abnormal. And, when the number of monitoring nodes which detect an error in a monitored node j is smaller than a threshold for satisfying an "abnormality determination condition 2", then those monitoring nodes are determined to be abnormal. Here, nodes that satisfy neither of the two conditions are determined to be normal.

However, in such configuration, a single counter is used to count abnormality occurrences irrespective of the abnormality types (abnormalities satisfying the "abnormality determination condition 1" and the "abnormality determination condition 2"). As a result, different fault occurrences look the same to the application. In many cases, an abnormality satisfying the "abnormality determination condition 1" occurs in the sending node, while that satisfying the "abnormality determination condition 2" occurs in the receiving node. However, the above-stated configuration has a problem because it can not distinguish such different abnormal situations from each other.

An object of the invention is to provide a distributed system capable of locating a faulty node for each fault type.

A distributed system of the invention has a plurality of nodes connected via a network, in which each node includes: an error monitor unit for monitoring an error in each of the other nodes; a send/receive processing unit for sending and receiving data to and from each of the other nodes in order to exchange error monitor results among the nodes via the network; an abnormality determination unit for determining, for each node, presence or absence of an abnormality based on an abnormality determination condition; and a counter unit for counting occurrences of the abnormality for each node and each abnormality determination condition.

The invention provides a distributed system capable of locating a faulty node for each fault type.

### BRIEF DESCRIPTION OF THE DRAWINGS

Fig. 1 is a block diagram of a distributed system.
Fig. 2 is a flow chart of fault identifying processes according to a mutual node-fault monitoring mechanism.
Fig. 3 is an exemplary method of counting occurrences of two types of abnormalities (respectively satisfying abnormality determination conditions 1 and 2).
Fig. 4 is an exemplary method of counting occurrences of two types of abnormalities (respectively satisfying abnormality determination conditions 1 and 2).
Fig. 5 illustrates an exemplary operation of a mutual node-fault monitoring mechanism.
Fig. 6 is a flow chart of fault identifying processes according to a mutual node-fault monitoring mechanism.
Fig. 7 illustrates an exemplary operation of a mutual node-fault monitoring mechanism.
Fig. 8 is a flow chart of fault identifying processes according to a mutual node-fault monitoring mechanism.
Fig. 9 illustrates an exemplary parallel operation of multiple monitoring rounds.
Fig. 10 illustrates an exemplary operation of a mutual node-fault monitoring.

### DESCRIPTION OF THE PREFERRED EMBODIMENTS

Embodiments of the invention will now be described.

### [Embodiment 1]

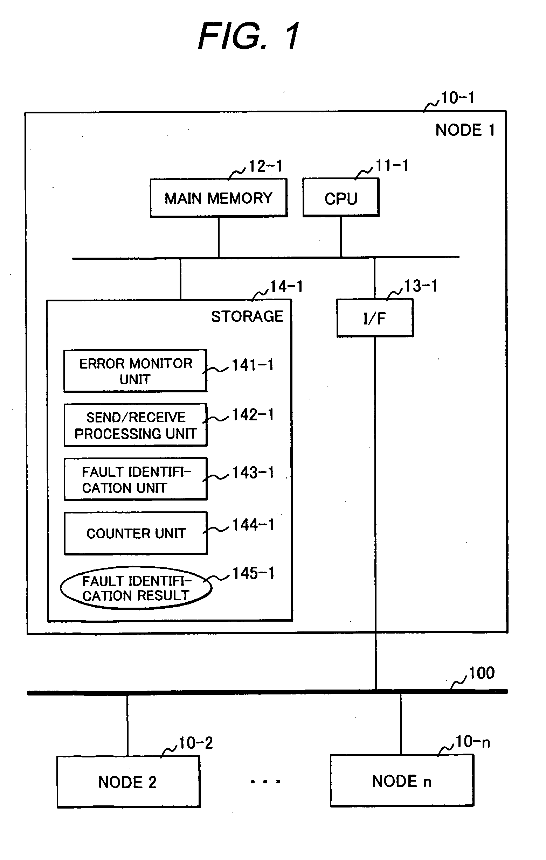

Fig. 1 is a block diagram of a distributed system according to Embodiment 1.

The distributed system includes multiple nodes 10 (10-1, 10-2, ... 10-n), which are connected to each other via a network 100. The node is a processing unit that can exchange information with the other nodes via a network, and includes an electrical control such as a CPU, actuators and their drivers, sensors, etc. The network 100 is a multiplex transmission network, in which a node can simultaneously broadcast the same information to all the other nodes connected to the network.

Each node i (i: node number, i = 1, ... n) includes a CPU 11-i, a main memory 12-i, an I/F 13-i and a storage 14-i, all of which are connected to each other via an internal communication line and the like. The I/F 13-i is connected to the network 100.

The storage 14-i stores, as well as fault identification result 145-i, programs for an error monitor unit 141-i, send/receive processing unit 142-i, fault identification unit 143-i and counter unit 144-i. The fault identification result 145-i includes a monitor result table, a majority-voted-abnormality counter table and a minority-voted-abnormality counter table (which will be detailed later).

The CPU 11-i performs processes by loading those programs into the main memory 12-i and executing them. The programs and data as described herein may be prestored in the storage or inputted from a storage medium such as a CD-ROM or downloaded from a different system via a network. In addition, functions performed by the programs may be implemented using dedicated hardware. In the following descriptions, various processes are performed by the programs. It should be appreciated, however, that they actually are the CPUs that perform such processes.

The error monitor unit 141-i monitors (MON) errors in the other nodes. The send/receive processing unit 142-i sends and receives, via the network 100, data for identifying faults in the other nodes. Based on the data, the fault identification unit 143-1 identifies (ID) a faulty node. The counter unit 144-i counts occurrences of abnormality in each abnormal node for each abnormality determination condition.

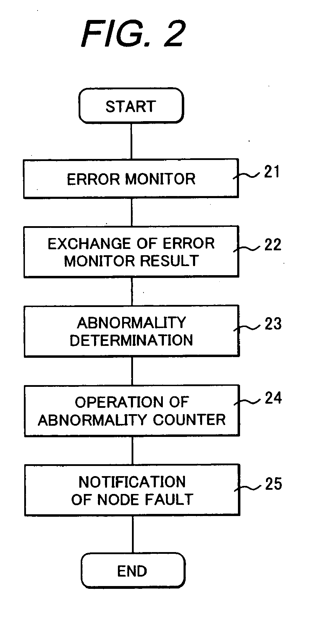

Fig. 2 is a flow chart of fault identifying processes according to a mutual node-fault monitoring mechanism. The processes are performed with all nodes synchronously communicating with each other via the network 100.

First, the error monitor unit 141-i monitors the other nodes and independently determines errors for each sending node based on the received data and status in which the data is received (step 21). The error item to be monitored (hereinafter, "error monitor item") may be plural. For example, in "reception error" monitoring, an error is determined when there occurs a data-reception-related error such as nonreceipt and error detection using an error-detection-code. In "serial number error" monitoring, an error is determined if the receiving node detects that a serial number of an application, which must be incremented by the sending node for each communication cycle, is not incremented. The serial number is for checking error occurrence in an application of a sending node. In "self diagnosis error" monitoring, each node sends, to the other nodes, the diagnosis result of its own node (hereinafter, self diagnosis result) and then each receiving node determines an error of the sending node based on the received self diagnosis result. The "self diagnosis error" and "serial number error" may be combined as a single monitor item. In this case, when at least one of the two error types is detected, it may be determined that there occurs an error of the combined item.

Then, the send/receive processing unit 142-i exchanges such error monitor results obtained at step 21 with the other nodes (step 22). As a result, each node acquires error monitor results obtained at all nodes including itself.

Next, based on the error monitor results gathered from all nodes at step 22, the fault identification unit 143-i counts, for each error monitor and each node, the number of nodes who detect an error and determines that an abnormality exists in the node for the error monitor item if the number exceeds half the total number of nodes minus one (step 23). Here, the threshold number for abnormality determination is not limited to half the total number of nodes minus one, but may be any predetermined number.

If, at step 23, such an abnormality is determined for each error monitor item and each node, the counter unit 144-i increments the count of abnormality occurrences for the error monitor item of the node. If no abnormality is determined, it decrements the count (step 24). Here, the count of abnormality occurrences needs not necessarily be decremented, but may be reset or left unchanged. The choice of procedure needs to be preset.

If the count of abnormality occurrences exceeds a predetermined threshold, the counter unit 144-i notifies the control application of the fact that a fault occurs (step 25). A method for such notification is to set a node fault flag corresponding to each error monitor item in each node. The control application can access such node fault flags to be informed of fault occurrences. In order to immediately notify the control application of a fault occurrence, an interrupt may be asserted to the control application or a callback function may be called after the corresponding node fault flag has been set.

While the above abnormality determination method is based on majority voting, there are two types of abnormality determination conditions as has been already described in the SUMMARY OF THE INVENTION. Abnormality occurrences are counted for each node, each monitor item and each abnormality determination condition; that is, when there occurs, at a node and for a monitor item, an abnormality satisfying an abnormality determination condition, the corresponding abnormality counter is incremented. If there is no such abnormality, the corresponding abnormality counter is operated (e.g., decremented) according to a specification. Each node fault flag contains information about the abnormality determination condition as well as the node number and error monitor item.

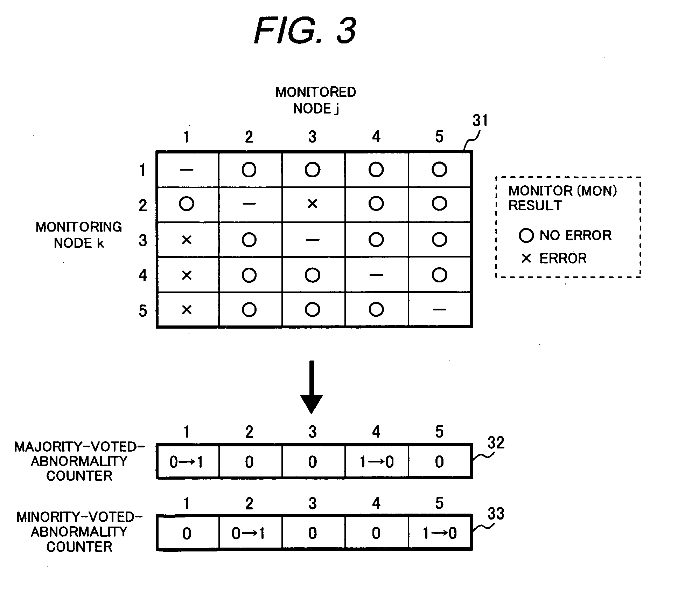

Fig. 3 is an exemplary method of counting occurrences of the two types of abnormalities (respectively satisfying the abnormality determination conditions 1 and 2).

A monitor-result table 31 contains, for a certain error monitor item, error monitor results of all nodes gathered by exchange of data between nodes (EXD). The table contains the presence or absence of error of each node j (j = 1 ... n) detected independently by each node k (k = 1 ... n) upon data reception. However, the result for each node detected by its own node is excluded. A circle and x indicate "no error" and "error", respectively. Each node has its own monitor-result table 31 for each error monitor item.

In addition, there are provided two abnormality counter tables: a majority-voted-abnormality counter table 32 in which each abnormality count is incremented when the corresponding node satisfies the abnormality determination condition 1, and a minority-voted-abnormality counter table 33 in which each abnormality count is incremented when the corresponding node satisfies the abnormality determination condition 2. Again, each node has its own tables 31 and 32 for each error monitor item.

The monitor-result table 31 is used to determine an abnormality in each node. In this example, all nodes report "error" for the node 1. This meets the abnormality determination condition 1, and therefore the abnormality count for the node 1 in the table 32 is incremented from 0 to 1.

And, a majority of nodes report "no error" for the node 3, while only the node 2 reports "error". This case meets the abnormality determination condition 2, and therefore the abnormality count for the node 2 in the table 33 is incremented from 0 to 1.

The nodes 3, 4 and 5 satisfy neither of the two conditions. For the node 3, the current abnormality counts in the tables 32 and 33 are both 0, and are therefore left unchanged at 0. For the node 4, the count in the table 32 is decremented from 1 to 0, while that in the table 33 is left unchanged at 0. For the node 5, the count in the table 33 is decremented from 1 to 0, while that in the table 32 is left unchanged at 0.

When an abnormality count in the majority-voted-abnormality counter table exceeds a threshold, the corresponding node fault flag is set. Hereinafter, this situation is called "majority-voted-fault" for convenience. Likewise, when an abnormality count in the minority-voted-abnormality counter table exceeds a threshold, the corresponding node fault flag is set. Hereinafter, this situation is called "minority-voted-fault" for convenience.

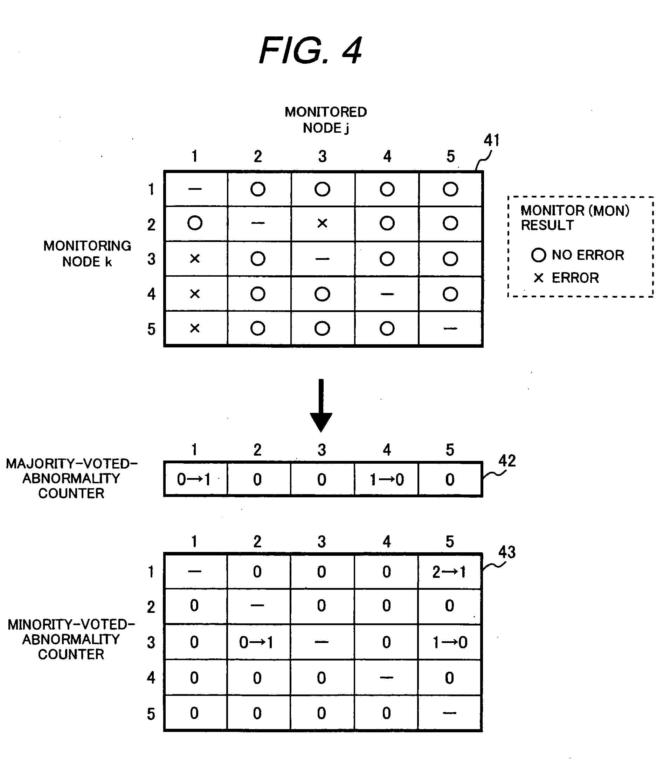

Fig. 4 is another exemplary method of counting occurrences of the two types of abnormalities.

A monitor-result table 41 and majority-voted-abnormality counter table 42 are the same as the monitor-result table 31 and majority-voted-abnormality counter table 32 in Fig. 3. A minority-voted-abnormality counter table 43 is different from the table 33 of Fig. 3. When a node k detects an error in the node j and satisfies the abnormality determination condition 2, the node j is hereinafter called "minority-voting-associated-node" for convenience. In the table 43, each minority-voted-abnormality is classified according to the "minority-voting-associated-node". Here, for each monitoring node, its own node is excluded from the classification according to the "minority-voting-associated-node".

The node 1 satisfies the abnormality determination condition 1 but does not satisfy the condition 2. Therefore, for the node 1 in the table 43, the abnormality counts for all the minority-voting-associated-nodes are left unchanged at 0. Only the node 2 detects "error" for the node 3, and thus satisfies the abnormality determination condition 2. Therefore, for the node 2 in the table 43, the abnormality count for the minority-voting-associated-node 3 is incremented from 0 to 1. The nodes 3 and 4 satisfy neither of the two conditions, and therefore, for these nodes, the abnormality counts for all the minority-voting-associated-nodes are left unchanged at 0. The node 5 also satisfies neither of the two conditions. Therefore, the abnormality count for the minority-voting-associated-node 1 is decremented from 2 to 1; that for the node 3 is decremented from 1 to 0; and those for the other nodes are left unchanged at 0.

By repeating the above procedure, a highly reliable fault identification method can be provided, and also information about fault occurrences can be shared between nodes. Further, the counting of abnormality occurrences and the subsequent setting of the corresponding node fault flag for each of the two abnormality determination conditions allow the application to acquire information about fault occurrences more accurately and detailedly.

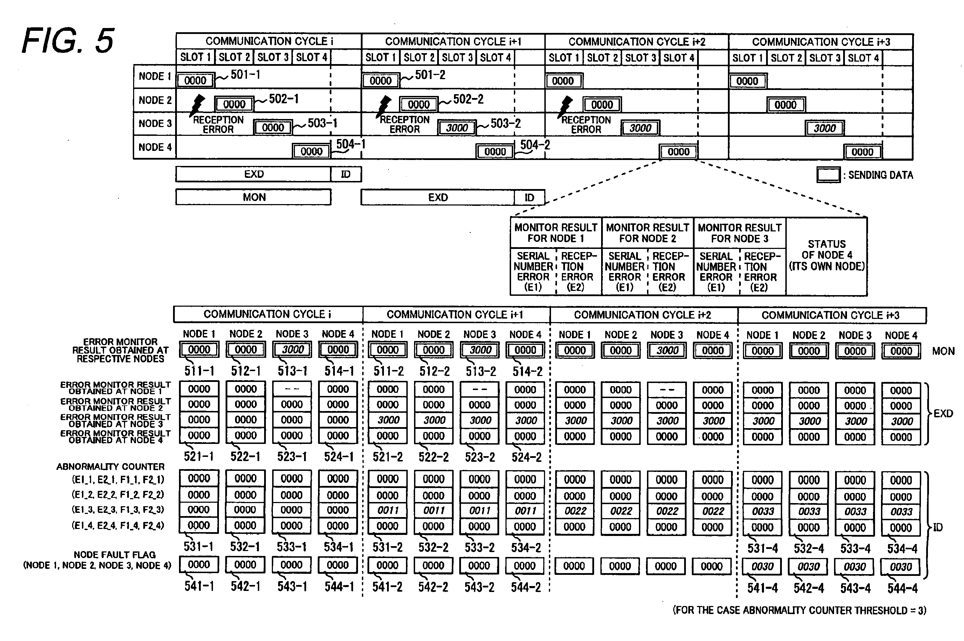

Fig. 5 illustrates an exemplary operation of the mutual node-fault monitoring mechanism.

In this example, the "serial number error" and "reception error" are employed as the error monitor item. And, the error monitoring and fault identification procedures at each node are performed toward the end of each communication cycle after the required data exchange between nodes has been completed.

At the slots 1 - 4 of a communication cycle i, the nodes 1 - 4 sequentially send the respective error monitor results 501-1 to 504-1 (expressed in quaternary code) obtained at the previous cycle. And each node receives and stores them as data 521-1 to 524-1 (in quaternary code). Each sending data consists of error monitor results for four nodes 1 - 4, each monitor result consisting of a bit E1 indicating a result for the "serial number error" and a bit E2 indicating a result for the "reception error". Here, the two bits corresponding to its own node contain a self diagnosis result for its own node.

As shown, the node 3 detects a reception error at the slot 1 of the communication cycle i, and fails to receive the error monitor result sent from the node 1 (see 523-1). As a result, the node 3 determines, at the cycle i, a "reception error" for the node 1 (indicated by 513-1, where the data structure is the same as that of the sending data). The node 3 also determines a "serial number error" because the increment of the serial number cannot be confirmed due to the reception error. The nodes 1, 2 and 4 have not detected any error during the communication cycle i (511-1, 512-1 and 514-1).

The gathered error monitor result (521-1 to 524-1) has, for any monitor item, no node for which a majority of the nodes detect error occurrence. Therefore, in the abnormality determination procedure at the communication cycle i, all the abnormality counts are left unchanged at 0 (531-1 to 534-1), and therefore no node fault flags are set (541-1 to 544-1). The node fault flag of each node contains, for each of the monitored nodes 1 - 4, four bits: a bit indicating an occurrence of the "serial number fault" according to the abnormality determination condition 1; a bit indicating an occurrence of the "reception fault" according to the abnormality determination condition 1; a bit indicating an occurrence of the "serial number fault" according to the abnormality determination condition 2; and a bit indicating an occurrence of the "reception fault" according to the abnormality determination condition 2.

The abnormality counters Em_n (m = 1,2), for the node n, counts occurrences of abnormalities satisfying the abnormality determination condition 1 respectively for the two monitor items (corresponding to the error bits E1 and E2), while the abnormality counters Fm_n counts occurrences of abnormalities satisfying the abnormality determination condition 2.

In the error monitor result sent by the node 3 at the communication cycle (i+1), the error bits E1 and E2 for the node 1 are both "1" (503-2), reflecting the fact that the node 3 has detected errors for the node 1 at the previous cycle i. In the error monitor results sent by the nodes 1, 2 and 4, all the error bits are "0" (501-2, 502-2 and 504-2). At this cycle, again, the node 3 detects a reception error at the slot 1 and fails to receive the error monitor result sent from the node 1 (see 523-2). As a result, the node 3 determines a "reception error" and "serial number error" for the node 1 at the communication cycle (i+1) (indicated by 513-2).

Based on the error monitor results (521-2 to 524-2) for the cycle i gathered at the cycle (i+1), the node 3 satisfies the abnormality determination condition 2 for both the "serial number error" and "reception error" where the minority-voting-associated-node is the node 1 for both abnormalities. As a result, the corresponding abnormality counters of each node are incremented (F1_3 and F2_3 for the node 3 in 531-2 to 534-2). At this point, no node fault flags are set (541-2 to 544-2).

Again, the node 3 detects a reception error at the slot 1 of the cycle (i+2), and similar operations are repeated also at the cycles (i+2) and (i+3). Thus, as a result of the fault identification (ID) procedure at the cycle (i+3), the abnormality counters F1_3 and F2_3 are incremented up to "3" (531-4 to 534-4). If the threshold abnormality count is set at "3", these F1_3 and F2_3 values exceed the threshold, and as a result the fault node flags indicating the "serial number fault" and "reception fault" satisfying the abnormality determination condition 2 are set for the node 3 (541-4 to 544-4).

As is appreciated, the multiple reception abnormalities are recognized as a minority-voted-fault, which is then notified to the application through the corresponding node fault flag. While, the above embodiment has been described for the case of the minority-voted-abnormality based on the abnormality determination condition 2, the procedure is similar for the case of the majority-voted-abnormality based on the abnormality determination condition 1.

### [Embodiment 2]

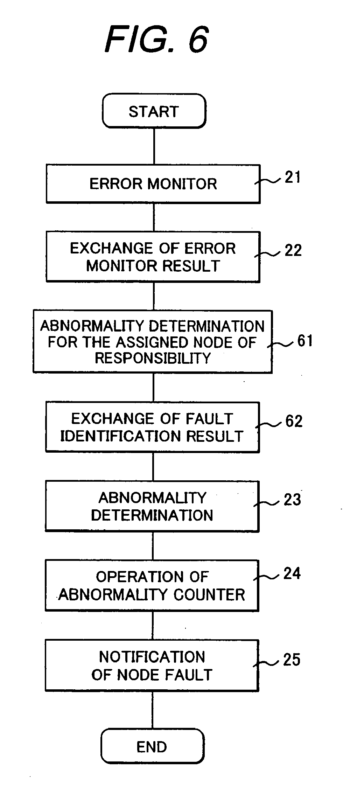

Fig. 6 is a flow chart of fault identifying processes according to a mutual node-fault monitoring mechanism.

In this embodiment, after the step 22 (as described in the Embodiment 1), the fault identification unit 143-i of each node is in charge of abnormality determination of only one of the other nodes participating in the mutual-monitoring (step 61). The assignment is made so as to avoid overlap. Also, the assignments are rotated among the nodes for each communication cycle. This enables distribution of load for the abnormality determination among nodes, thus reducing the load of each node.

Next, the send/receive processing unit 142-i sends its abnormality determination result to the other nodes and receives the abnormality determination results obtained at the other nodes (step 62). Thus, each node can acquire the abnormality determination results obtained at all the nodes including itself. The rest of the procedure is similar to that in Fig. 2. In addition, the abnormality determination according to the abnormality determination condition 2 may be performed for all the nodes after the step 62 at each node.

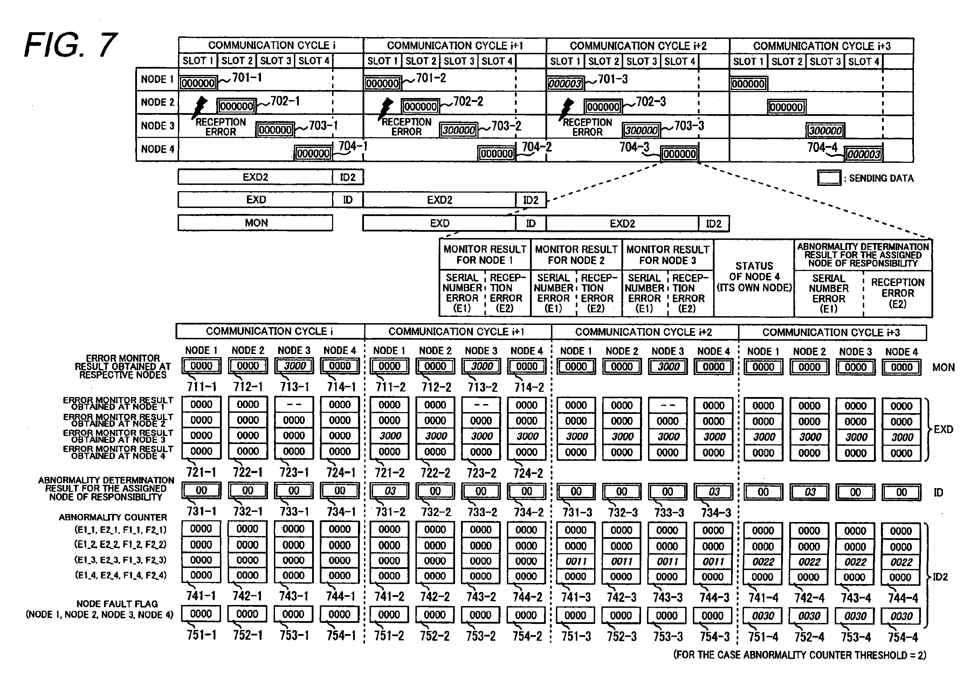

Fig. 7 illustrates an exemplary operation of the mutual node-fault monitoring. Similarly to Fig. 5, the exchange of assigned node numbers and abnormality determination results are performed toward the end of each communication cycle.

At the slots 1 = 4 of a communication cycle i, the nodes 1 - 4 sequentially send the respective error monitor results of the previous cycle (701-1 to 704-1). And each node receives and stores them as data 721-1 to 724-1 (only the error monitor result of the sending data). The sending data also includes, in addition to the error monitor result of the same structure as that described in Fig. 5, the abnormality determination result for the cycle before the previous cycle and obtained at the previous cycle. Each node sends an abnormality determination result for its assigned node of responsibility. And, the abnormality determination result consists of: first two bits E1 and E2 respectively indicating results for the two monitor items based on the abnormality determination condition 1; and second two bits E1 and E2 indicating results based on the abnormality determination condition 2.

At the cycle i, the node 3 detects a reception error at the slot 1 and therefore fails to receive the abnormality determination result sent from the node 1 (723-1). As a result, the node 3 determines a "serial number error" and "reception error" for the node 1 at the communication cycle i (713-1). The nodes 1, 2 and 4 have not detected any error during the communication cycle i (711-1, 712-1 and 714-1).

At the cycle i, the gathered error monitor results (721-1 to 724-1) have, for any monitor item, no node for which a majority of the nodes detect error occurrence. Therefore, the abnormality determination result is "no abnormality" for each node and each monitor item (731-1 to 734-1, which have the same data structure as that in the sending data).

Further, at the cycle i, the gathered abnormality determination results for the cycle before the previous cycle have no "abnormality"; therefore, all the abnormality counts are left unchanged at 0 (741-1 to 744-1) and no fault flags are set (751-1 to 754-1).

Assume that, at the cycle (i+1), the nodes 1, 2, 3 and 4 are in charge of abnormality determination of the nodes 3, 4, 1 and 2, respectively. Based on the error monitor results (721-2 to 724-2) gathered at the cycle (i+1), the node 1 determines that the node 3 satisfies the abnormality determination condition 2 for both the "serial number error" and "reception error" (731-2). The other nodes satisfy neither of the two abnormality determination conditions (732-2, 733-2 and 734-2).

Further, at the cycle (i+1), the gathered abnormality determination results for the cycle before the previous cycle have no "abnormality"; therefore, all the abnormality counts are left unchanged at 0 (741-2 to 744-2) and no fault flags are set (751-2 to 754-2).

At the communication cycle (i+2), the nodes 1 - 4 sequentially send the respective abnormality determination results obtained at the previous cycle as well as the respective error monitor results (701-3 to 704-3). As a result, each node is informed that the node 3 satisfies the abnormality determination condition 2 (condition for minority-voted abnormality) for both the "serial number error" and "reception error" and increments the corresponding abnormality counts for the node 3 (F1_3 and F2_3 of 741-3 to 744-3). And, no fault flags are set yet (751-3 to 754-3).

At the cycle (i+1), again, the node 3 detects a reception error at the slot 1. Therefore, an abnormality determination similar to that in the cycle (i+1) is made at the cycle (i+2) (731-3 to 734-3), except that the nodes of responsibility assigned to the nodes 1, 2, 3 and 4 are rotated from the nodes 3, 4, 1 and 2 to the nodes 4, 1, 2 and 3, respectively.

Again, the node 3 detects a reception error at the slot 1 of the cycle (i+2), and a similar operation is repeated also at the cycle (i+3). Thus, as a result of the abnormality determination at the cycle (i+3), the error counters F1_3 and F2_3 are incremented up to "2" (741-4 to 744-4). If the threshold abnormality count is set at "2", these F1_3 and F2_3 values exceed the threshold, and as a result the node fault flags indicating the "serial number fault" and "reception fault" satisfying the abnormality determination condition 2 are set for the node 3 (751-4 to 754-4).

As is appreciated, the multiple reception abnormalities are recognized as a minority-voted-fault, which is then notified to the application through the corresponding node fault flag. While, the above embodiment has been described for the case of the minority-voted-abnormality based on the abnormality determination condition 2, the procedure is similar for the case of the majority-voted-abnormality based on the abnormality determination condition 1.

### (Embodiment 3)

A manner in which a control application utilizes a mutual node-fault monitoring and notification function will be specifically described below using a BBW (Brake By Wire) system as an exemplary control application.

In this embodiment, the "serial number error" and "reception error" are employed as the error monitor item. The procedural flow of the mutual node-fault monitoring may be that as described in Fig. 2 or that as described in Fig. 6. The abnormality counting method as described in Fig. 3 is employed. However, two abnormality counter thresholds are employed. Accordingly, two types of node fault flags are provided. When an abnormality count exceeds a first threshold H1 (> 0), a corresponding node fault level 1 flag is set. When an abnormality count exceeds a second threshold H2 (≥ H1), a corresponding node fault level 2 flag is set.

The configuration of the BBW system is as follows. FlexRay is used as the communication protocol for the network 100, and nodes ECUs 1 - 5 are connected to the FlexRay network. The ECUs 1 - 4 are disposed near each vehicle wheel, and performs current control of, via an inverter, a motor which provides a brake force by actuating the brake pad of each wheel. The ECUs 1 - 4 control the right-front, left-front, right-rear and left-rear wheels, respectively. The ECU 5 calculates target brake forces for the wheels based on factors such as the degree of depression of the brake pedal and sensor outputs such as yaw rate, sends them to the ECUs 1 - 4 via the FlexRay network, and controls the respective brake motors so that the actual brake forces match the target brake forces.

The degree of depression of the brake pedal is sent from another ECU to the FlexRay network on a regular basis. The sensor outputs such as yaw rate are sent to the ECU 5 via a CAN (Controller Area Network).

Exemplary operations of the control application in response to various fault situations will be described below.

### (Case 1)

When the level 1 flag corresponding to the majority voted serial number fault is set for the ECU 5 and notified to the control application of each node, the ECUs 1 - 4 determine a fatal fault occurrence in the control application of the ECU 5, and immediately resort to a backup control without waiting for the setting of the fault level 2 flag. And, the ECU 5 is shut down if possible.

The backup control of each ECU acquires the information about the degree of depression of the brake pedal via the network, and calculates a target brake force by simply multiplying the degree of depression by a preset proportionality constant, and controls the brake motor to achieve the target.

### (Case 2)

When a level 1 fault of the minority voted serial number abnormality for the ECU 5 is notified, only the ECU 5 detects errors in the control applications of the other ECUs. In this case, each ECU node determines that there is no control problem and continues the normal control. However, each time a fault occurs, a log recording the occurrence time and fault type is created. The log can be utilized by an engineer for later diagnosis.

If, after the occurrence of the level 1 fault, a level 2 fault of the same fault type is notified, the ECUs 1 - 4 determine that a fatal fault occurs and resort to the backup control, and the ECU 5 is shut down.

### (Case 3)

When a level 1 fault of the majority voted serial number abnormality for one of the ECUs 1 - 4 is notified, it is determined that the brake force of the faulty ECU (for which the corresponding node fault flag is set) is unreliable, and the remaining normal ECUs resort to a three-wheel brake control. The three-wheel brake control utilizes only three of the four brake motors. In this control, the ECU 5 calculates balanced target brake forces for the respective normal three ECUs and commands these ECUs to achieve those targets so that a stable brake force can be obtained with the three wheel brakes. The target brake force of the faulty ECU is set at zero. For example, when a fault occurs in the right rear wheel, the target brake forces of both front wheels are set greater than normal. The faulty ECU is shut down if possible.

### (Case 4)

When a level 1 fault of the minority voted serial number abnormality for one of the ECUs 1 - 4 is notified, each ECU node determines that there is no control problem and continues the normal control.

If, after the occurrence of the level 1 fault, a level 2 fault of the same fault type is notified, control is transitioned to the three-wheel brake control. The faulty ECU is shut down if possible.

### (Case 5)

When a level 1 fault of the majority voted reception abnormality for the ECU 5 is notified, the ECUs 1 - 4 cannot receive the respective target brake forces and therefore resort to the backup control. The ECU 5 is shut down if possible.

### (Case 6)

When a level 1 fault of the minority voted reception abnormality for the ECU 5 is notified, only the ECU 5 fails to receive data from some of the ECUs 1 - 4. If the specification specifies that this is not problematic for control, each node determines to continue the normal control.

If that is problematic for control, when a level 1 or 2 fault of this fault type is notified, the control of the ECUs 1 - 4 are automatically transitioned to the backup control. Alternatively, the ECU 5 may be shut down after having notified the ECUs 1 - 4 of the shutdown. The shutdown can be notified through a flag additionally provided in the sending data of the ECU 5.

In this case, there occurs majority-voted-abnormalities for both the "serial-number-error" and "reception error" of the ECU 5 because of the shutdown of the ECU 5. Thus, the controls of the ECUs 1 - 4 are transitioned to the backup control based on confirmation of the notification of the shutdown from the ECU 5 and the majority-voted-abnormalities of the ECU 5 without waiting for the setting of the corresponding node fault flags.

### (Case 7)

When a level 1 fault of the majority voted reception abnormality for one of the ECUs 1 - 4 is notified, the other normal ECUs cannot receive data from the faulty ECU. If the specification specifies that this is not problematic for control, each node determines to continue the normal control.

If that is problematic for control, when a level 1 or 2 fault of this fault type is notified, the controls of the normal ECU nodes are transitioned to the backup control and the faulty ECU is shut down if possible.

### (Case 8)

When a level 1 fault of the minority voted reception abnormality for one of the ECUs 1 - 4 is notified, only the faulty ECU cannot receive data from the other normal ECUs. In this case, the operations of the normal ECU nodes depend on whether the "minority-voting-associated-node" is the ECU 5 or one of the ECUs 1 - 4. This is because the importance levels of the sending data from the ECU nodes differ. For example, according to a specification, being unable to receive the target brake forces from the ECU 5 can be fatal for the ECUs 1 - 4, while being unable to receive data from one of the ECUs 1 - 4 may not be very problematic for the control of the other normal ECUs.

In order to conform to such a specification, instead of one minority-voted-abnormality counter, two types of minority-voted-abnormality counters may be used: a first abnormality counter for the case that the "minority-voting-associated-node" is the ECU 5; and a second abnormality counter for the case that the "minority-voting-associated-node" is any one of the ECUs 1 - 4. When, at a communication cycle, one of the ECUs 1 - 4 detect an error in any one of the others of the ECUs 1 - 4 and satisfies the minority-voted-abnormality, the second abnormality counter is incremented.

In this system, when a minority-voted-fault associated with the first abnormality counter is notified, the controls of the three normal ECU nodes are transitioned to the three-wheel brake control, and the faulty ECU node is shut down. However, when a minority-voted-fault associated with the second abnormality counter is notified, the normal operation may be continued depending on specification.

As is appreciated, by utilizing the mutual node-fault monitoring mechanism, the control application can have various options for handling various faults and can make a suitable choice of such options, thus enhancing system availability while maintaining reliability.

### (Embodiment 4)

The above-described embodiments have the following problem. An abnormality determination based on the abnormality determination condition 1 is carried out by majority voting of the error detection results obtained at all nodes; therefore, all the nodes provide the same determination result. However, an abnormality determination based on the abnormality determination condition 2 is individually provided by one of the nodes, and is not based on majority voting among nodes; therefore, such an individually obtained abnormality determination may not be supported by a majority of the other nodes.

Consider, for example, a situation in which all nodes 1 - 4 are normal, and therefore no nodes detect error occurrence in the other nodes. And assume in this normal situation that the error monitor result sent from the node 2 is altered upon reception by the node 4 because of some sort of software error, and as a result the node 4 erroneously determines that the node 2 detects an error in the node 1 although actually it does not. Then, in the abnormality determination processes, the nodes 1 - 3 determine that there is no abnormality in the node 2, while the node 4 determines that the node 2 has an abnormality satisfying the abnormality determination condition 2; in other words, there is a discord in the abnormality determination results among nodes.

In order to solve this problem in the case of an abnormality determined based on the abnormality determination condition 2, instead of immediately operating the corresponding abnormality counter in response to an individual abnormality determination at each node, all abnormality determination results obtained at all nodes are exchanged among nodes and then the gathered results are majority voted for final determination of an abnormality. Hereinafter, for convenience, an abnormality satisfying the abnormality determination condition 1 is called a "sender abnormality", while an abnormality determined by majority voting of abnormalities satisfying the abnormality determination condition 2 is called a "receiver abnormality".

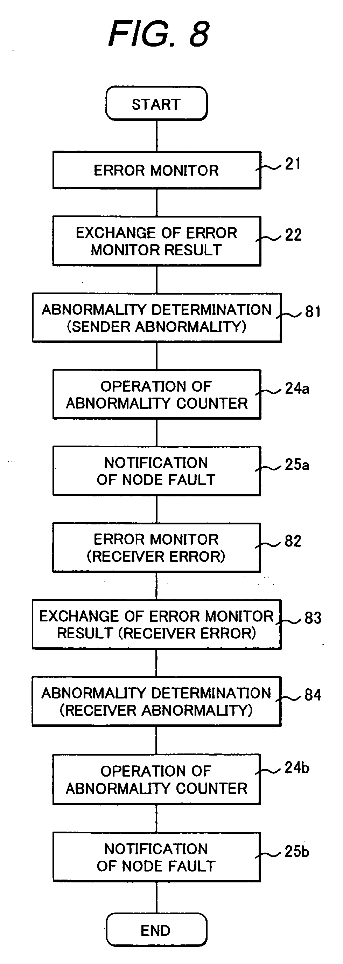

Fig. 8 illustrates a flow chart of fault identifying processes according to a mutual node-fault monitoring method for solving the above problem.

Based on the error monitor results gathered at the step 22, the fault identification unit 143-i performs abnormality determination by majority voting for only the "sender error" of each monitor item (step 81). And, if the "sender error" of a monitor item satisfies the abnormality determination condition 1, it is determined that there occurs an abnormality for the "sender error". That is, the "sender abnormality" of the monitor item is determined. The next steps 24a and 25a are similar to the steps 24 and 25 (as described in Figs. 2 and 6) except that they handle only the "sender abnormality" of each monitor item. Thus, the abnormality counter operations (plus the node fault notifications) of the "sender abnormality" and "receiver abnormality" are performed separately at different process stages.

Next, the error monitor unit 141-i performs detection of "receiver errors" based on the error monitor results gathered by the data exchange at the step 22. Here, if the "sender error" of a monitor item satisfies, for a monitored node, the abnormality determination condition 2, then it is determined that the "receiver error" of the monitor item is detected for the monitored node (step 82).

Then, the send/receive processing units 142-i of all nodes exchange the receiver error results detected at the step 82 (step 83). Here, the sending data from each node contains two separate data regions respectively for the receiver error result and sender error result.

Based on the error monitor results gathered at the step 83, the fault identification unit 143-i then performs abnormality determination, by majority voting, of the "receiver error" of each monitor item (step 84). The next steps 24b and 25b are similar to the steps 24 and 25 except that they handle only the "receiver abnormality" of each monitor item.

In addition, similarly to the process flow as described in Fig. 6, at the step 81 and/or step 84, each node may perform the abnormality determination of only one node of responsibility assigned to itself, followed by exchange of abnormality determination results among nodes.

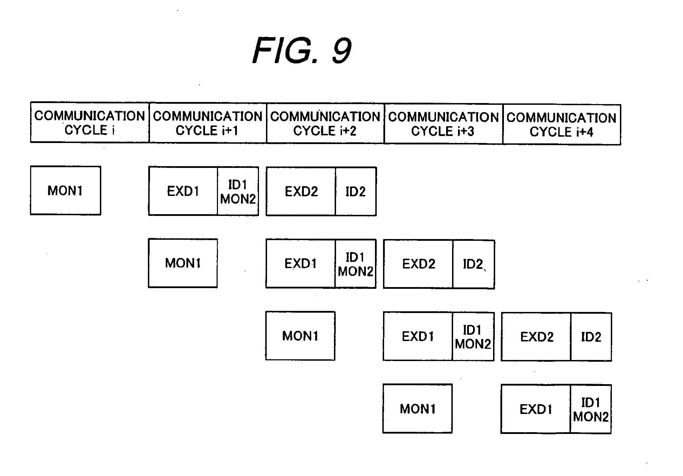

Fig. 9 illustrates an exemplary pipeline-and-parallel operation of the mutual node-fault monitoring procedure according to the Fig. 8 flow chart. In Fig. 9, symbol "MON1" represents the detection of sender errors; symbol "EXD1" represents the exchange of sender error detection results between nodes; symbol "ID1" represents the abnormality determination of sender errors; symbol "MON2" represents the detection of receiver errors; symbol "EXD2" represents the exchange of receiver error detection results between nodes; and symbol "ID1" represents the abnormality determination of receiver errors.

Each node conducts a round of fault identification processes (round 1), which includes; performing an error monitoring (MON1) at a communication cycle i; performing an exchange of error detection results (EXD1), an abnormality determination (ID1) and an error monitoring (MON2) at a communication cycle (i+1); and performing an exchange of error detection results (EXD2) and an abnormality determination (ID2) at a communication cycle (i+2).

Each node also conducts a round 2 of fault identification in parallel with the round 1. Specifically, the cycle (i+1) conducts the round 1 exchange of error detection results (EXD1) and simultaneously therewith conducts the round 2 error monitoring (MON1) based on information such as the received data and the reception status of the round 1 exchange (EXD1). The cycle (i+2) conducts the round 2 exchange of error detection results (EXD1) simultaneously with conducting the round 1 exchange of error detection results (EXD2). It also simultaneously conducts the error monitoring (MON1) of a round 3. In addition to these processes, the cycle (i+2) also conducts the round 2 abnormality determination (ID1) and error monitoring (MON2) as well as the round 1 abnormality determination (ID2). Further, the cycle (i+3) conducts the round 2 exchange of error detection results (EXD2), the round 3 exchange of error detection results (EXD1) and the error monitoring (MON1) of a round 4. It also conducts the round 2 abnormality determination (ID2), and the round 3 abnormality determination (ID1) and error monitoring (MON2).

Similar processes are repeated also in the succeeding cycles. In this manner, abnormality determinations ID1 and ID2 can be carried out in every successive communication cycle.

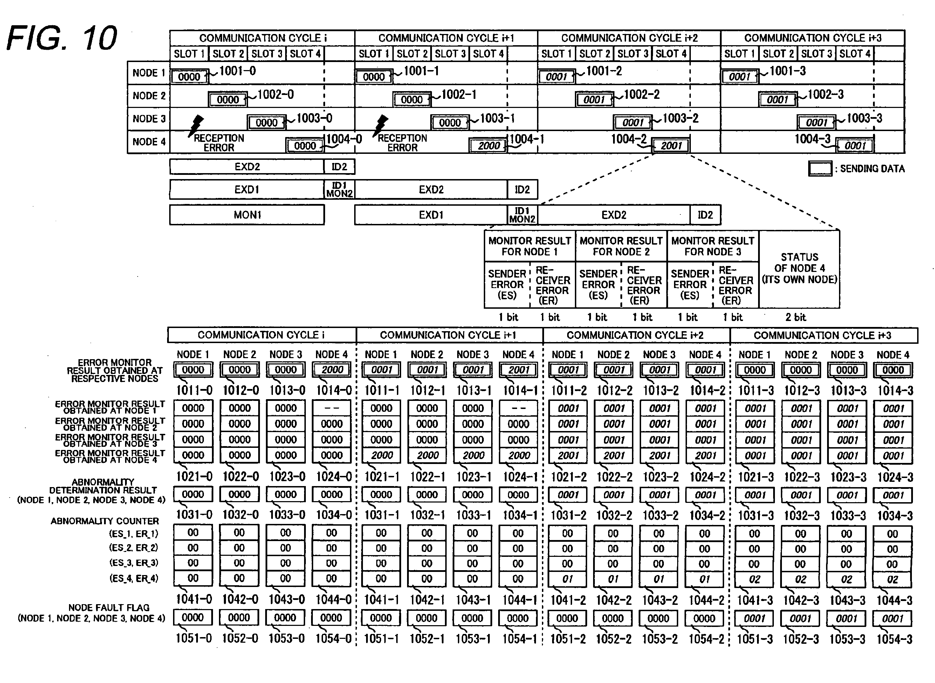

Fig. 10 illustrates an exemplary operation of the mutual node-fault monitoring procedure according to the Fig. 8 flow chart.

This example uses only one error monitor item. And, there are two types of errors for the monitor item, sender error and receiver error. And, the threshold count for each node fault flag is "2".

At the slots 1 - 4 of a communication cycle i, the nodes 1 - 4 sequentially send the respective error monitor (MON1 and MON2) results of the previous cycle (1001-0 to 1004-0, quaternary code). And each node receives and stores them (1021-0 to 1024-0, quaternary code). The sending data from each node contains a sender error bit ES and receiver error bit ER for each of the monitored nodes 1 - 4. Here, the two bits corresponding to its own node contain a self diagnosis result for its own node.

As shown, the node 4 detects a reception failure at the slot 1 of the communication cycle i, and fails to receive the error monitor result sent from the node 1 (1024-0). The node 4, as a result of the error monitor (MON1), detects a "sender error" for the node 1 (1014-0, the data structure is the same as that of the sending data). The nodes 1 to 3 do not detect any error by the error monitoring (MON1) at the cycle i (1011-0 to 1013-0).

The gathered error monitor results (1021-0 to 1024-0) have, for the sender error or receiver error, no node for which a majority of the nodes detect error occurrence (1031-0 to 1034-0). Therefore, in the abnormality determination procedures (ID1 and ID2) at the cycle i, all the abnormality counters are left unchanged at 0 (1041-0 to 1044-0), and therefore no node fault flags are set (1051-0 to 1054-0). Also, no nodes detect a receiver error occurrence for any monitored node at the error monitoring (MON2) operation.

Here, the node fault flag contains, for each of the monitored nodes 1 - 4, two bits: a bit notifying a sender abnormality, and a bit notifying a receiver abnormality. The abnormality counters ES_n, for the node n, counts occurrences of the sender abnormality determined by the majority voting of the error bits ES, while the abnormality counters ER_n counts occurrences of the receiver abnormality determined by the majority voting of the error bits ER.

At the communication cycle (i+1), each node sends its error monitor (MON1 and MON2) results of the previous cycle; therefore, in the sending data from the node 4, the error bit ES for the node 1 is "1" (1004-1). All the error bits in the sending data from the nodes 1 to 3 are "0" (1001-1 to 1003-1). At this cycle, again, the node 4 detects a reception failure at the slot 1 and fails to receive the error monitor result sent from the node 1 (1024-1). Again, as a result of the error monitor (MON1), the node 4 detects a "sender error" of the node 1 (1014-1).

In the abnormality determination procedures (ID1 and ID2) and error monitoring procedure (MON2) based on the error monitor result gathered (1021-1 to 1024-1), a receiver error is detected for the node 4 (1011-1 to 1014-1). However, no sender abnormality nor receiver abnormality is determined for any node (1031-1 to 1034-1). Therefore, all the abnormality counters (1041-1 to 1044-1) and all the node fault flags (1051-1 to 1054-1) are left unchanged.

Then, at the cycle (i+2), in the sending data of the node 4, the bit ES for the node 1 and the bit ER for its own node are "1" (1004-2). In the sending data of the nodes 1 to 3, only the bit ER for the node 4 is "1" (1001-2 to 1003-2). No monitoring nodes detect a sender error for any node in the error monitor operation (MON1) (1011-2 to 1014-2).

The error monitor results gathered (1021-2 to 1024-2) show that a majority of monitoring nodes detect a receiver error for the node 4; therefore, as a result of the abnormality determination operations (ID1 and ID2) of each node, a receiver abnormality for the node 4 is determined (1031-2 to 1034-2). Similarly to the step (i+1), a receiver error is detected for the node 4 by the error monitor operation (MON2) (1011-2 to 1014-2).

The abnormality counter of each node for the node 4 receiver abnormality is incremented from 0 to 1 (1041-2 to 1044-2). However, this value of the abnormality counter does not yet reach the threshold, and therefore the corresponding node fault flag remains unchanged (1051-2 to 1054-2).

Then, at the cycle (i+3), in the sending data of the nodes 1 - 4, the bit ER for the monitored node 4 is "1" (1001-3 to 1003-3). No monitoring nodes detect a sender error for any node in the error monitor operation (MON1) (1011-3 to 1014-3).

Similarly to the step (i+2), as a result of the abnormality determination operations (ID1 and ID2) based on the error monitor results gathered (1021-3 to 1024-3), each monitoring node determines a receiver abnormality for the node 4 (1031-3 to 1034-3). No monitoring nodes detect a receiver error of any node in the error monitor operation (MON2) (1011-3 to 1014-3).

The abnormality counter of each node for the node 4 receiver abnormality is incremented from 1 to 2 (1041-3 to 1044-3). This time, this value of the abnormality counter reaches the threshold and sets the corresponding node fault flag, through which the control application is then notified of the fault occurrence (1051-3 to 1054-3).

As is appreciated from the above description, both the sender fault and receiver fault are identified with equal reliability and notified to the control application.

### (Industrial Applicability)

Distributed control systems are used in a wide variety of industrial fields such as vehicles, construction machines and FA (Factory Automation). Application of the present invention to such a distributed control system can enhance system availability while maintaining reliability. Further, the invention can be achieved at low cost without the need of extra devices.

## Claims

1. A distributed system having a plurality of nodes (10) connected via a network (100), each node comprising:
an error monitor unit (141) for monitoring an error in each of the other nodes;
a send/receive processing unit (142) for sending and receiving data to and from each of the other nodes in order to exchange error monitor results among the nodes via the network;
an abnormality determination unit (143) for determining, for each node, presence or absence of an abnormality based on an abnormality determination condition; and
a counter unit (144) for counting occurrences of the abnormality for each node and each abnormality determination condition

2. The distributed system of Claim 1, wherein the abnormality determination condition includes: a first abnormality determination condition based on which, if the number of certain ones of the nodes that detect the error in a specific node of the nodes exceeds a threshold, the specific node is determined to have the abnormality; and a second abnormality determination condition based on which, if the number of certain ones of the nodes that detect the error in a specific node is smaller than a threshold, the certain nodes are determined to have the abnormality.

3. The distributed system of Claim 1, wherein the error is referred to as a "non-receiver error", and if the number of certain ones of the nodes that detect the "non-receiver error" in a specific node is smaller than a threshold, the certain nodes are determined to have a "receiver error",
wherein the data sent and received by the send/receive processing unit has two regions respectively containing information about the occurrence of the "receiver error" and information about the occurrence of the "non-receiver error"; and
wherein the abnormality determination condition includes: a first abnormality determination condition based on which, if the number of certain ones of the nodes that detect the "receiver abnormality" in a specific node of the nodes exceeds a threshold, the specific node is determined to have a "receiver abnormality"; and a second abnormality determination condition based on which, if the number of certain ones of the nodes that detect the "non-receiver error" in a specific node exceeds a threshold, the specific node has a "non-receiver abnormality".
